# FASCICULE DE BREVET EUROPEEN

(11) **EP 1 957 328 B1**
(45) Date de publication et mention de la délivrance du brevet: **15.09.2010**
(21) Numéro de dépôt: 06842073.6
(22) Date de dépôt: 30.11.2006
(51) Int. Cl.: B60R 21/34, B62D 25/10, B62D 29/00

(54) **CAPOT D'UN VEHICULE ET PROCEDE DE FABRICATION D'UN TEL CAPOT**
FAHRZEUGHAUBE UND HERSTELLUNGSVERFAHREN DAFÜR
VEHICLE HOOD AND A METHOD FOR THE PRODUCTION THEREOF

(30) Priorité: 01.12.2005 FR 0512202
(43) Date de publication de la demande: 20.08.2008
(73) Titulaire: Inoplast, 07100 Annonay (FR); Renault SAS, 92100 Boulogne Billancourt (FR)
(72) Inventeur: TETU, Yvon, Raymond, Maurice, F-92250 La Garenne Colombes (FR); ZANOLIN, Dominique, F-78150 Le Chesnay (FR); MARTIN, Laurent René Félix, F-07340 Peaugres (FR)
(74) Mandataire: Remy, Vincent Noel Paul
(86) Numéro de dépôt international: PCT/FR2006/051262
(87) Numéro de publication internationale: WO 2007/063256

(56) Documents cités:
- EP-A- 0 399 648
- EP-A- 1 022 199
- WO-A-03/064221
- US-A- 5 124 191

## Description

La présente invention concerne un capot d'un véhicule, notamment d'un véhicule automobile, ainsi qu'un procédé de fabrication d'un tel capot.

L'invention s'intéresse à la problématique générale de la protection des piétons en cas de choc frontal avec un véhicule, notamment un véhicule automobile. Pour quantifier la gravité d'un choc occasionné à la tête d'un piéton heurtant le capot d'un véhicule lorsque ce piéton est renversé par le véhicule, les constructeurs et équipementiers automobiles utilisent généralement le critère dit « HIC », appelé ainsi pour résumer l'expression anglaise « Head Injury Criterion ». Le critère HIC, propre à chaque type de capot, donne une indication de l'intensité du choc entre 1a tête et le capot en prenant essentiellement en compte la décélération maximale subie par la tête du piéton au cours du choc.

Pour satisfaire le niveau de HIC, le document WO-A-03/04263 propose une structure de capot hybride, comportant une peau externe métallique et une couche interne eu BMC (« Bulk Moulding Compound »), désigné parfois par le terme français de prémix. Le BMC est une matière composite cassante, constituée d'un mélange de résine, de renforcements, de charges, etc., non sous forme de tissus, en général préparé par injection avant son utilisation. L'utilisation du BMC vise à permettre, lors de la phase initiale d'un choc entre le capot et la tête d'un piéton, à décélérer assez rapidement la tête du piéton puis, lors d'une phase ultérieure du choc, à éviter un arrêt complet de la tête trop brutal, en prévoyant la rupture cassante de la couche interne de BMC. Cependant, des tests mettent en évidence que le caractère cassant du BMC présente un inconvénient majeur : comme la rupture du BMC est aléatoire, tout au moins difficilement prédéterminée de manière précise, les mesures de HIC présentent une dispersion très étendue, tant pour plusieurs capots structurellement identiques que pour un même capot testé en différents points.

Le document WO 03/064221 décrit un capot selon le préambule de la revendication 1 et un procédé de fabrication d'un tel capot.

Le but de la présente invention est de proposer un capot, à structure hybride, présentant, lors d'un choc avec la tête d'un piéton, un comportement mécanique satisfaisant pour le HIC, qui soit à la fois prédéterminé et homogène.

Ce but est atteint, selon l'invention grâce à, un capot de Selon la revendication 1, et un procéde de fabrication d'un tel capot selon la revendication 6.

Le terme SMC reprend les initiales de l'expression anglaise « Sheet Moulding Compound » et est désigné parfois par le terme français de préimprégné. Le SMC est une préforme sous forme d'une ou de plusieurs feuilles constituées par des fils, des mâts ou des tissus .de fibres minérales ou organiques, imprégnés d'une résine. Le SMC est ainsi une composition intégrée prête à être moulée, en étant transformée par compression, ce qui limite le fluage de la matière synthétique lors de son moulage et réduit ainsi l'endommagement et l'orientation des fibres dans le produit final.

La doublure en SMC du capot selon l'invention possède des caractéristiques flexibles, ce qui confère au capot un comportement mécanique homoqène : lors de la décélération de la tête d'un piéton heurtant le capot, ce capot travaille, au moins lors de la phase initiale du choc, en phase élastique sans rupture. Dans le cas où le capot est libre d'être enfoncé sans rencontrer de point dur dans la zone moteur du véhicule, le capot travaille essentiellement, voire exclusivement, en phase élastique sans rupture, avec un comportement prédéterminé précis : le capot présente une rigidité globale homogène, liée aux rigidités de la peau et de la doublure en SMC. Si l'enfoncement du capot conduit à l'appui de la doublure en SMC sur un point dur de la zone moteur, la flexibilité du SMC permet à la doublure de se déformer localement, en périphérie du point dur, pour empêcher un arrêt brutal de la tête du piéton. La doublure en SMC est ainsi à même de travailler en flambant globalement, lorsqu'elle se déforme sur toute son étendue, et/ou en s'écrasant localement, la doublure formant alors avantageusement des sur-épaisseurs destinées à être ruinées par écrasement sans flambement.

En pratique, la doublure en SMC est assemblée à la peau métallique de manière à maintenir un écartement entre les majeures parties de la peau et de la doublure, c'est-à-dire en dehors de zones restreintes d'accotement de la peau et de la doublure, notamment en dehors des zones périphériques de la peau et de la doublure. Cet écartement entre peau et doublure permet à la structure d'ensemble du capot de générer une inertie compatible avec les diverses exigences du produit, notamment en terme de raideur statique, c'est-à-dire de tenue statique en flexion et torsion. En outre, la doublure en SMC ainsi écartée permet d'adapter au mieux le capot selon l'invention à l'architecture sous capot de la zone moteur, sans modifier la géométrie d'ensemble extérieure, définie par la peau : des fonctions additionnelles peuvent alors être intégrées à la doublure, par exemple une fonction du type conduit d'air débouchant au niveau d'une batterie du moteur pour la refroidir.

L'utilisation du SMC présente également d'autres avantages. La résine du SMC peut être conductrice de l'électricité, ce qui permet l'application d'une peinture ou d'un revêtement électrostatique, notamment le long d'une ligne d'assemblage. De plus, les SMC ont des modules élastiques qui varient de 5000 Mpa à 40000 Mpa environ de sorte qu'il 1 est possible, dans une application particulière, de choisir un SMC ayant un module plus adapté pour optimiser la valeur HIC du capot et/ou la profondeur maximale d'enfoncement de ce capot. Par ailleurs, deux doublures, réalisées en des SMC de modules différents, peuvent être indifféremment utilisées avec une même peau pour obtenir deux capots répondant à des réglementations ou des recommandations différentes en ce qui concerne le niveau de protection des piétons.

Suivant un premier mode général de réalisation, la peau externe du capot est métallique, en étant réalisée en acier, en aluminium ou en tout alliage métallique utilisé dans le domaine de la carrosserie automobile.

Suivant un second mode général de réalisation, la peau externe du capot est réalisée en matière thermo-plastique ou en un composite, par exemple en SMC. Le capot obtenu présente une raideur moindre que celle d'un capot à peau métallique et peut être par exemple utilisé pour recouvrir un coffre avant d'un véhicule dont le moteur est prévu à l'arrière.

Suivant d'autres .caractéristiques de ce capot, prises isolément ou suivant toutes les combinaisons techniquement possibles :
- sur sa face tournée à l'opposé de la peau, la doublure présente au moins une surface d'appui sur un élément rigide de la caisse du véhicule ;
- la doublure inclut au moins une zone déformée s'étendant en saillie du reste de la doublure dans une direction opposée à la peau, la surface d'appui étant ménagée par cette zone déformée ;
- la peau et la doublure sont solidarisées à demeure l'une à l'autre par des points et/ou des lignes de colle, interposés entre la face de la peau dirigée vers la doublure et la face de la doublure dirigée vers la peau ;
- il comporte en outre au moins une platine rigide adaptée pour fixer, au moins temporairement, la position relative de la peau et de la doublure, notamment avant que cette peau et cette doublure soient solidarisées à demeure l'une à l'autre.

L'invention a également pour objet selon la revendication 6 un procédé de fabrication d'un capot d'un véhicule.

Le procédé selon l'invention permet d'obtenir le capot tel que défini ci-dessus. Ce procédé permet ainsi d'obtenir un capot à structure hybride, présentant un HIC satisfaisant, en utilisant essentiellement les caractéristiques mécaniques flexibles de la doublure en SMC, moulées de manière indépendante à l'obtention de la peau externe du capot.

Si la peau externe du capot à fabriquer est métallique, l'étape d'obtention de cette peau consiste notamment en une étape de conformation d'une tôle métallique. Si la peau externe est constituée d'une matière thermostatique ou d'un composite, cette étape d'obtention consiste par exemple en une étape de moulage ou analogue.

Suivant d'autres caractéristiques avantageuses de ce procédé :
- avant de relier à demeure la peau et la doublure l'une à l'autre, on assemble fixement la peau sur la doublure en utilisant au moins une platine rigide qui est solidarisée à la fois à la peau et à la doublure et qui est disposée entre la peau et la doublure ;
- avec la peau et la ou les platines de nature métallique, la ou chaque platine est solidarisée à la peau par soudage ou analogue, pour permettre une conduction électrique entre elles :
- pour relier à demeure la peau et la doublure assemblées fixement l'une à l'autre par la ou les platines, on interpose, entre la peau et la doublure, des points ou des lignes d'une colle apte à être réticulée, puis on fait réticuler cette colle, de préférence lors d'un passage du capot assemblé au reste du véhicule dans un bain de cataphorèse ;
- la ou chaque platine est utilisée pour parler des éléments mécaniques associés au capot, tels qu'une charnière d'ouverture du capot.

L'invention sera mieux comprise à la lecture de la description qui va suivre, donnée uniquement à titre d'exemple et faite en se référant aux dessins sur lesquels :
- la figure 1 est une vue schématique en perspective d'un véhicule automobile, vu par l'avant, incluant un capot conforme à l'invention ;
- la figure 2 est une section schématique selon le plan II de la figure 1 ;
- la figure 3 est un diagramme représentatif du HIC du capot des figures 1 et 2 ;
- la figure 4 est une vue en perspective et partiellement en arraché d'un détail cerclé IV à la figure 1, à plus grande échelle ; et
- la figure 5 est une section suivant le plan v de la figure 4.

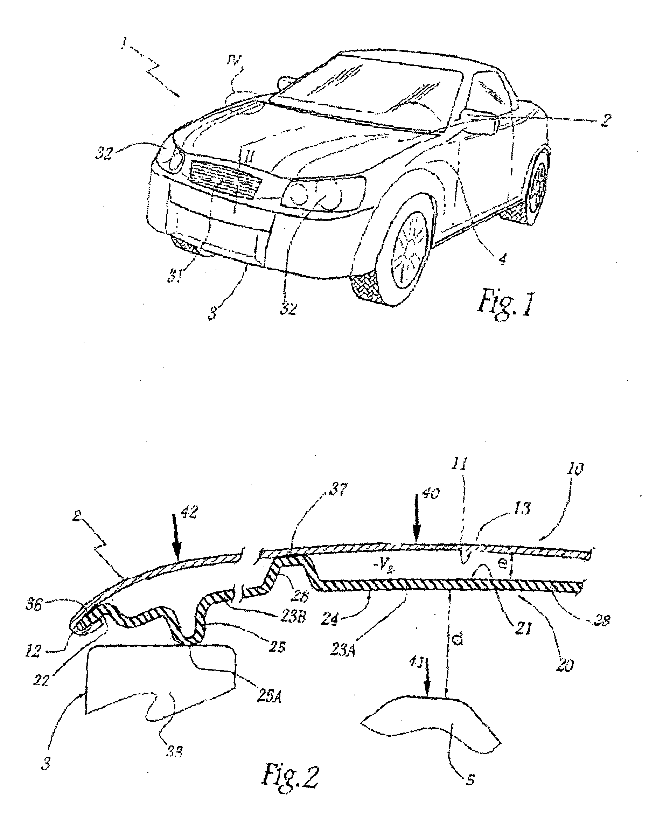

Sur la figure 1 est représenté un véhicule automobile 1, comportant un capot avant 2, une façade avant 3 appartenant à la caisse du véhicule, et une aile avant gauche 4. Le capot 2 constitue une couverture de protection du moteur du véhicule 1, tandis que la façade 3, disposée à l'aplomb de l'extrémité avant du capot 2, porte des organes, tels qu'une calandre 31 d'un radiateur, des ensembles de phare 32, etc.

Comme représenté plus en détail sur la figure 2, le capot 2 comporte une peau externe 10 et une doublure interne 20. La doublure 20 est constituée d'une couche en une matière composite SMC. Le SMC, dont le nom reprend les initiales de l'expression anglaise correspondante « Sheet Moulding Compound », est parfois appelé également un imprégné et correspond à une préforme constituée, par des fils, des mats ou des tissus de fibres minérales ou organiques, imprégnés d'une résine. Cette résine est par exemple formée d'un polyester insaturé.

Dans l'exemple de capot considéré aux figures, la peau 10 est réalisée en métal, par exemple en acier ou en aluminium. En variante non représentée, cette peau peut être réalisée en une matière thermoplastique ou en une matière composite.

Le capot 2 considéré aux figures présente ainsi une structure globale hybride, associant une couche métallique externe et une couche composite interne.

La peau 10 forme une plaque globalement plane, de faible épaisseur et présentant une forme géométrique essentiellement rectangulaire vue de dessus. Cette forme de base peut présenter de légers bombements ou de légers cintrages, selon l'esthétique de la partie avant du véhicule 1.

La doublure en SMC 20 présente, globalement, une configuration analogue à celle de la peau 10. En pratique, cette doublure est plus épaisse que la peau et présente un contour extérieur légèrement plus petit que celui de la peau afin que cette dernière recouvre entièrement la doublure de manière à la masquer en totalité depuis l'extérieur, c'est-à-dire lorsque le capot 2 est observé comme à la figure 1.

Lorsque le capot 2 est dans sa configuration d'assemblage finale, comme aux figures 1 et 2, la doublure en SMC 20 est pour l'essentiel maintenue à distance de la peau métallique 10 de sorte qu'un volume libre V₂ est délimité entre la face supérieure 21 de la doublure et la face intérieure 11 de la peau, l'écartement entre ces faces étant noté e à la figure 2. La peau 10 et la doublure 20 sont solidarisées à demeure l'une à l'autre, au niveau de leurs bords périphériques, ainsi que localement en des zones prédéterminées des parties principales courantes de la peau et de la doublure.

Plus précisément, si on détaille par exemple les périphéries avant de la peau et de la doublure, comme représenté dans la partie gauche de la figure 2, la peau comporte un bord périphérique avant 12 plié sur lui-même de manière à recevoir le bord périphérique avant 22 de la doublure. Le bord 12 forme ainsi un crochet de retenue mécanique de la doublure, cette retenue étant avantageusement renforcée par l'interposition d'une colle structurelle ou d'un moyen analogue, tel qu'une ligne de colle périphérique 36.

Au niveau des parties courantes principales 13 et 23 de la peau 10 et de la doublure 20, séparées par le volume libre V₂, les faces 11 et 21 sont reliées à demeure par une colle à faible retrait, telle qu'un mastic, sous forme de points ou de lignes, tels que le point 37 représenté dans la partie droite de la figure 2. Chacun de ces points ou lignes de colle sont notamment prévus au niveau d'une zone locale déformée 28 de la doublure, s'étendant en saillie du reste de la partie 23, en direction de la peau. Ces zones déformées 28 présentent une hauteur sensiblement égale à l'écartement e entre peau et doublure de sorte que le sommet de chaque zone déformée est juxtaposée à la face 11 de la peau, avec interposition de colle pour constituer les points ou lignes précités. Une ou chacune des deux autres dimensions de chaque zone déformée 28 est nettement inférieure à la dimension correspondante du volume V₂ afin que l'essentiel de ce dernier reste libre, comme visible à la figure 2.

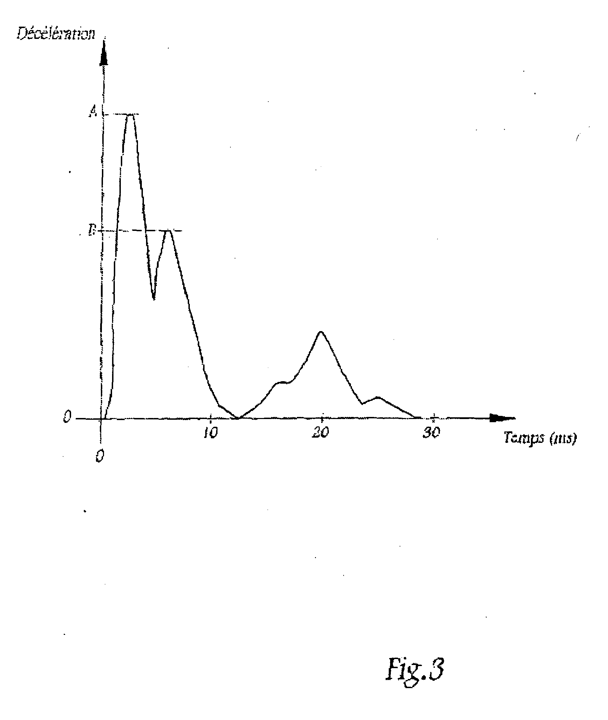

Lorsqu'un piéton est renversé par le véhicule 1 et que sa tête heurte le capot 2, ce dernier travaille selon un comportement mécanique relativement flexible, adapté pour limiter la valeur de HIC. A titre d'exemple, si l'on considère le choc indiqué par la flèche 40 dans la partie droite de la figure 2, l'évolution de la décélération de la tête du piéton, en fonction du temps, est représentée à la figure 3, la valeur du HIC correspondant à une partie de l'aire située sous la courbe de la figure 3.

Cette courbe présente, dans le temps, un premier pic d'intensité A correspondant à la déformation globale du capot 2, c'est-à-dire à la déformation relativement rigide de la peau 10 et à la déformation flexible de la doublure en SMC 20. On constate que, grâce à la structure du capot, la rigidité globale de ce capot reste modérée puisque la doublure travaille essentiellement en phase élastique.

La courbe de la figure 3 présente, après le premier pic d'intensité A, un second pic d'intensité B lié à la présence d'un point dur sur lequel vient s'appuyer la doublure en SMC 20 lors de sa déformation sous l'effet du choc avec la tête du piéton. Plus précisément, comme représenté dans la partie droite de la figure 2, une partie 23A de la doublure 20 est disposée à l'aplomb d'un point dur 5, constitué par exemple d'un organe rigide du moteur du véhicule 1, tel qu'un boîtier ou analogue. Sous l'effet du choc figuré par la flèche 40, le capot 2 se déforme suivant la flèche 41, jusqu'à ce que la face inférieure 24 de la doublure 20 soit pressée en appui contre le point dur 5, ce qui implique une augmentation de la décélération de la tête du piéton jusqu' au pic d'intensité B de la courbe de la figure 3. Grâce au SMC, l'intensité B de la décélération liée à la présence du point dur reste modérée, en particulier inférieure à l'intensité A de la décélération liée à la déformation globale du capot sans contact avec un point dur. Ce comportement avantageux du capot 2 résulte du comportement flexible de la doublure en SMC et, dans une moindre mesure, de l'écartement entre la doublure et la peau. En effet, lorsque la doublure en SMC est appuyée contre le point dur 5, elle se déforme localement, en périphérie de ce point dur, et absorbe ainsi une partie significative de l'énergie libérée par le choc contre ce point dur. On comprend que, en variante non représentée, il est ainsi possible d'adapter la forme géométrique, en particulier l'épaisseur, de la partie 23A de la doublure.

Une distance d sépare la face inférieure de la partie de doublure 23A et l'extrémité supérieure du point dur 5. Le capot 2 offre un comportement avantageux pour une distance d standard, typiquement supérieure à 35 mm, comme pour un débattement inférieur.

Au niveau de la périphérie avant du capot 2, la distance séparant la doublure en SMC 20 d'un élément rigide 33 de la façade 3 est cependant plus petite que la distance d précitée. Pour limiter la course d'enfoncement du capot 2, tout en maintenant une valeur de HIC convenable, la partie d'extrémité avant 23B de la partie principale 23 de la doublure 20 inclut une zone locale déformée 25 s'étendant en saillie du reste de la partie 23, dans une direction opposée à la peau 10, comme représenté dans la partie gauche de la figure 2. Cette zone 25 est dimensionnée pour s'appuyer lors d'un choc contre l'extrémité supérieure de l'élément de façade 33 et ménage ainsi une surface d'appui correspondante 25A quasi-ponctuelle. Un jeu de fonctionnement est prévu entre la zone 25 et l'élément de façade 33, ce jeu étant résorbé dès le début du choc.

Lorsque la tête d'un piéton heurte la partie d'extrémité avant du capot 2, comme indiqué par la flèche 42 dans la partie gauche de la figure 2, le capot 2 se déforme de manière analogue à ce qui a été décrit plus haut en regard de la partie droite de la figure 2. Cependant, comme la partie de doublure 23B sollicitée s'appuie localement contre l'élément de façade 33, au niveau de la surface 25A, pendant le choc, la course d'enfoncement du capot reste modérée tandis que, grâce au comportement flexible du SMC, la valeur du HIC demeure inférieure à une valeur limite préfixée.

On va maintenant décrire un procédé de fabrication du capot 2.

Pour obtenir le capot 2, on dispose, d'une part, d'une tôle métallique et, d'autre part, d'une couche en SMC, les opérations d'obtention de chacun de ces deux composants étant réalisées de manière indépendante. Ainsi, par exemple, d'un côté, la tôle est conformée pour obtenir la peau 10, notamment par emboutissage et/ou par cintrage. D'un autre côté, le SMC est moulé avec un moule permettant d'obtenir la configuration géométrique finale de la doublure 20.

La peau 10 et la doublure 20 ainsi obtenues sont ensuite assemblées l'une sur l'autre, de manière à ce que la peau recouvre la doublure comme représenté à la figure 2, notamment en délimitant l'espace libre intercalaire V₂. Une fois assemblées l'une à l'autre dans des positions relatives correctes, la peau et la doublure sont solidarisées l'une à l'autre par les éléments de colle 36 et 37 ou par des moyens analogues.

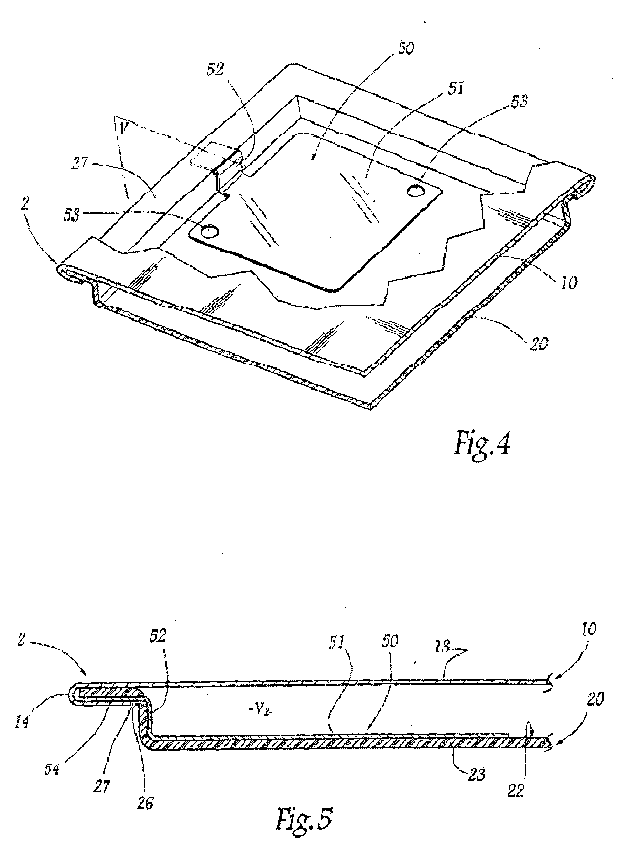

Pour faciliter cet assemblage, on utilise avantageusement une platine métallique 50, représentée aux figure 4 et 5. La platine représentée est située au niveau du coin arrière droit du capot 2 mais, en pratique, plusieurs platines sont avantageusement utilisées, notamment aux deux coins arrières du capot.

La platine 50 se présente globalement sous la forme d'une plaquette plane 51 d'un des côtés de laquelle s'étend une patte coudée 52 venue de matière avec la plaquette. La platine 50 est mise en place sur la face supérieure 22 de la doublure 20 avant que cette dernière ne soit assemblée à la peau 10 : la plaquette 51 est posée à plat sur la face 21 tandis que la patte 52 est introduite dans une ouverture 26 sensiblement complémentaire, pratiquée au travers du bord périphérique droit 27 de la doublure. Dans cette position de la platine, la plaquette 51 est solidarisée à la partie principale 23 de la doublure, par exemple par rivetage, en des zones 53, par l'intermédiaire par exemple d'écrous à sertir non représentés. De tels écrous permettent avantageusement de faire porter à la platine des éléments additionnels de la caisse du véhicule 1, par exemple une charnière d'ouverture du capot 2. La peau 10 est ensuite assemblée à la doublure, la platine 50 se trouvant alors à l'intérieur du volume V₂, comme représenté à la figure 5. La patte 52 est alors solidarisée à la peau 10, plus précisément au bord périphérique droit 14, plié sur lui-même, de la peau, en étant soudé à ce bord, comme indiqué par le point de soudure 54.

La présence de la ou des platines 50 permet ainsi, grâce à la rigidité de cette ou ces dernières, d'immobiliser la peau 10 et la doublure 20 l'une par rapport à l'autre, pour permettre la manipulation du capot 2 en vue de son montage sur la caisse du véhicule automobile 1 en cours d'assemblage. Ultérieurement, en particulier lorsque cette caisse est trempée dans un bain de cataphorèse ou est soumise à un traitement thermique analogue, la chaleur de ce traitement entraîne la réticulation des éléments de colle 36 et 37, ainsi que des autres points ou lignes de colle analogues, solidarisant ainsi à demeure la peau et la doublure dans leur configuration d'assemblage finale. On comprend donc que le point de soudure 54, ainsi que les points de rivetage 53 n'ont à présenter qu'une résistance suffisant pour permettre la manipulation du capot 2 avant la solidarisation à demeure au niveau des éléments 36, 37 et analogues.

Dans les cas où, par exemple, le SMC constituant la doublure 20 n'est pas conducteur ou l'est de manière insuffisante, l'utilisation de la ou des platines 50 permet également la conduction électrique entre la peau 10 du capot 2 et d'autres éléments métalliques de la caisse du véhicule 1 lorsque la plaquette 51 de la platine porte ces éléments de caisse, tels que la charnière d'ouverture précitée. L'existence de cette conductibilité électrique permet de peindre le capot avec une peinture électrostatique et/ou d'utiliser la peau comme un élément d'anti-parasitage. Elle permet également d'assurer, sans autre dispositif spécifique, la mise au potentiel électrique convenable du capot 2 lors de la cataphorèse et/ou d'opérations de peinture.

Divers aménagements et variantes au capot 2 décrit ci-dessus, ainsi qu'à son procédé de fabrication sont en outre envisageables. A titre d'exemples :
- plutôt que de prévoir la réticulation de la colle utilisée au niveau des points 31 et 32 lors de la cataphorèse de la totalité de la caisse du véhicule 1, cette réticulation peut être obtenue indépendamment du traitement du reste de la caisse, préalablement au montage du capot sur le reste du véhicule ; une telle manipulation est préférée lorsque la peau est constituée d'une matière thermoplastique ou composite ;
- le volume intercalaire V₂ peut être rempli d'une matière de garnissage à condition que cette matière n'induise aucune perturbation significative du comportement flexible de la doublure en SMC 20, en particulier par rapport à la peau métallique 10 ; et/ou
- les opérations de peinture du capot peuvent être réalisées avant le montage du capot sur le véhicule, notamment dans le cas où le capot est assemblé à la caisse après les opérations de peinture de cette dernière.

## Revendications

1. Capot (2) d'un véhicule (1), notamment d'un véhicule automobile (1), comportant une peau externe (10) et une couche interne en une matière composite, le capot comprenant au moins une zone d'accolement (12, 28) entre la peau et la doublure, **caractérisé en ce que**:
- la couche forme une doublure (20) réalisée en SMC
- la doublure s'étend à distance de la peau en dehors de chaque zone d'accolement, et
- le volume (V₂) délimité entre la peau (10) et la doublure (20) est laissé libre.

2. Capot suivant la revendication 1, **caractérisé en ce que** la peau (10) est métallique.

3. Capot suivant la revendication 1, **caractérisé en ce que** la peau est réalisée en matière thermoplastique ou on un composite.

4. Capot suivant l'une quelconque des revendications précédentes, **caractérisé en ce que**, sur sa face (24) tournée à l'opposé de la peau (10), la doublure (20) présente au moins une surface (25A) d'appui sur un élément rigide (33) de la caisse du véhicule (1).

5. Capot suivant l'une quelconque des revendications précédentes, **caractérise en ce qu**'il comporte en outre au moins une platine rigide (50) adaptée pour fixer, au moins temporairement, la position relative de la peau (10) et de la doublure (20).

6. Procédé de fabrication d'un capot (2) d'un véhicule (1), notamment d'un véhicule automobile (1), dans lequel on dispose d'une peau externe (10) pour le capot, **caractérisé en ce que**, lors d'une étape indépendante de l'obtention de la peau, on moule une couche en SMC en vue de disposer d'une doublure interne (20) pour le capot, et **en ce que**, ultérieurement aux étapes d'obtention de la peau et de moulage de la couche en SMC, on relie à demeure la peau et la doublure l'une à l'autre de sorte que le capot comprend au moins une zone (12, 28) d'accolement entre la peau et la doublure et, la peau recouvre la doublure, avec cette doublure s'étendant à distance de la peau en dehors de chaque zone d'accolement.

7. Procédé suivant la revendication 6, **caractérisé en ce que**, avant de relier à demeure la peau et la doublure l'une à l'autre, on assembla fixement la peau (10) sur la doublure (20) en utilisant au moins une platine rigide (50) qui est solidarisée à la fois à la peau et à la doublure et qui est disposée entre la peau et la doublure.

8. Procédé suivant la revendication 7, **caractérisé en ce que**, avec la peau (10) et la ou les platines (50) de nature métallique, la ou chaque platine est solidarisée à la peau par soudage ou analogue, pour permettre une conduction électrique entre elles.

9. Procédé suivant l'une des revendications 7 ou 8, **caractérisé en ce que**, pour relier à demeure la peau (10) et la doublure (20) assemblées fixement l'une à l'autre par la ou les platines (50), on interpose, entre la peau et la doublure, des points (37) ou des lignes (36) d'une colle apte à être réticulée, puis on fait réticuler cette colle, de préférence lors d'un passage du capot (2) assemblé au reste du véhicule (1) dans un bain de cataphorèse.

10. Procédé suivant l'une quelconque des revendications 7 à 9 , **caractérisé** la ou chaque palatine (50) est utilisée pour porter des éléments mécaniques associés au capot (2), tels qu'une charnière d'ouverture du capot.

## Claims

1. A vehicle hood in particular for a motor vehicle, the hood comprising an outer skin and an inner layer of composite material, the hood comprising at least a junction zone (12, 28) between the skin and the lining, **characterized in that** :
- the layer forms a lining made of SMC
- the lining extends at a distance from the skin out of each junction zone, and
- the volume defined between the skin and the lining is left empty.

2. A hood according to claim 1, **characterized in that** the skin (10) is made of metal.

3. A hood according to claim 1, **characterized in that** the skin is made of thermoplastic or composite material.

4. A hood according to any of the previous claims, **characterized in that** on its face (24) facing away from the skin (10), the lining (20) presents at least one surface (25A) for bearing against a rigid element (33) of the body of the vehicle (1).

5. A hood according to any of the previous claims, **characterized in that** it further includes at least one rigid baseplate (50) suitable for setting the position of the skin (10) relative to the lining (20), at least temporarily.

6. A method of fabricating a vehicle hood (2), in particular for a motor vehicle (1), in which an outer skin (10) is provided for the hood, **characterized in that** during a step that is independent of obtaining the skin, an SMC layer is molded in order to provide an inner lining (20) for the hood, and **in that**, after the steps of obtaining the skin and molding the SMC layer, the skin and the lining are permanently connected together so that the hood comprises at least one junction zone (12, 28) between the skin and the lining, the skin covers the lining, with the lining extending at a distance from the skin out of each junction zone.

7. A method according to claim 6, **characterized in that** prior to permanently connecting the skin and the lining together, the skin (10) is secured to the lining (20) by using at least one rigid baseplate (50) that is secured both to the skin and to the lining and that is disposed between the skin and the lining.

8. A method according to claim 7, **characterized in that**, with the skin (10) and the baseplate(s) being of a metallic nature, the or each baseplate is secured to the skin by welding or the like, in order to enable electrical conduction between them.

9. A method according to claim 7 or 8, **characterized in that** in order to connect the skin (10) permanently to the lining (20) when they are secured relative to each other by the baseplate(s) (50), spots (37) or lines (36) of adhesive suitable for being cross-linked are interposed between the skin and the lining, and the adhesive is caused to cross-link preferably while the hood (2) assembled to the remainder of the vehicle (1) is passing through a cataphoresis bath.

10. A method according to any of claims 7 to 9, **characterized in that** the or each baseplate (50) is used for carrying mechanical elements associated with the hood (2), such as a hinge for opening the hood.

## Patentansprüche

1. Haube (2) eines Fahrzeugs (1), insbesondere eines Kraftfahrzeugs (1), die eine Außenschale (10) und eine Innenschicht aus einem Verbundwerkstoff aufweist, wobei die Haube mindestens eine Anfügezone (12, 28) zwischen der Außenschale und der Innenverkleidung aufweist, **dadurch gekennzeichnet, dass**
- die Schicht eine Innenverkleidung (20) bildet, die aus SMC hergestellt ist,
- sich die Innenverkleidung beabstandet von der Außenschale außerhalb jeder Anfügezone erstreckt, und
- das Volumen (V₂), das zwischen der Außenschale (10) und der Innenverkleidung (20) abgegrenzt ist, frei gelassen wird.

2. Haube nach Anspruch 1, **dadurch gekennzeichnet, dass** die Außenschale (10) metallisch ist.

3. Haube nach Anspruch 1, **dadurch gekennzeichnet, dass** die Außenschale aus Thermoplastwerkstoff oder einem Verbundwerkstoff hergestellt ist.

4. Haube nach einem der vorhergehenden Ansprüche, **dadurch gekennzeichnet, dass** die Innenverkleidung (20) auf ihrer Seite (24), die von der Außenschale (10) abgekehrt ist, mindestens eine Auflagefläche (25A) auf ein starres Element (33) der Karosserie des Fahrzeugs (1) aufweist.

5. Haube nach einem der vorhergehenden Ansprüche, **dadurch gekennzeichnet, dass** sie ferner mindestens eine starre Platte (50) aufweist, die dazu angepasst ist, um mindestens vorübergehend die relative Position der Außenschale (10) und der Innenverkleidung (20) festzulegen.

6. Verfahren zum Herstellen einer Haube (2) eines Fahrzeugs (1), insbesondere eines Kraftfahrzeugs (1), bei dem eine Außenschale (10) für die Haube bereitgestellt wird, **dadurch gekennzeichnet, dass** man in einem von dem Erzeugen der Außenschale unabhängigen Schritt eine Schicht aus SMC formt, um eine Innenverkleidung (20) für die Haube bereit zu stellen, und dass man später, nach den Schritten des Erzeugens der Außenschale und des Formens der Schicht aus SMC, die Außenschale und die Innenverkleidung dauerhaft miteinander verbindet, so dass die Haube mindestens eine Anfügezone (12, 28) zwischen der Außenschale und der Innenverkleidung besitzt und die Außenschale die Innenverkleidung abdeckt, wobei sich diese Innenverkleidung von der Außenschale außerhalb jeder Anfügezone beabstandet erstreckt.

7. Verfahren nach Anspruch 6, **dadurch gekennzeichnet, dass** man vor dem dauerhaften Verbinden der Außenschale und der Innenverkleidung miteinander die Außenschale (10) fest auf der Innenverkleidung (20) angeordnet, indem man mindestens eine starre Platte (50) verwendet, die gleichzeitig fest mit der Außenschale und der Innenverkleidung verbunden ist und zwischen der Außenschale und der Innenverkleidung angeordnet ist.

8. Verfahren nach Anspruch 7, **dadurch gekennzeichnet, dass** mit der Außenschale (10) und der oder den Platten (50) aus Metall die oder jede Platte fest mit der Außenschale durch Schweißen oder Ähnliches verbunden ist, um eine elektrische Leitfähigkeit untereinander zu erlauben.

9. Verfahren nach einem der Ansprüche 7 oder 8, **dadurch gekennzeichnet, dass** man zum dauerhaften Verbinden der Außenschale (10) und der Innenverkleidung (20), die fest miteinander durch die Platte oder Platten (50) zusammengefügt sind, zwischen der Außenschale und der Innenverkleidung Punkte (37) oder Linien (36) eines Klebstoffs einfügt, der vernetzt werden kann, und man diesen Klebstoff dann vernetzen lässt, vorzugsweise bei einer Passage der mit dem Rest des Fahrzeugs (1) zusammengefügten Haube (2) in einem Kataphoresebad.

10. Verfahren nach einem der Ansprüche 7 bis 9, **dadurch gekennzeichnet, dass** die oder jede Platte (50) verwendet wird, um mechanische Elemente zu tragen, die zu der Haube (2) gehören, wie zum Beispiel ein Scharnier zum Öffnen der Haube.
